# EUROPÄISCHE PATENTSCHRIFT

(11) **EP 3 865 318 B1**
(45) Veröffentlichungstag und Bekanntmachung des Hinweises auf die Patenterteilung: **08.10.2025**
(21) Anmeldenummer: 20210537.5
(22) Anmeldetag: 30.11.2020
(51) Int. Cl.: B60C 23/04, B60C 23/00

(54) **BETRIEB EINES KONTROLLSYSTEMS FÜR EIN KRAFTFAHRZEUG**
OPERATION OF A CONTROL SYSTEM FOR A MOTOR VEHICLE
FONCTIONNEMENT D'UN SYSTÈME DE COMMANDE POUR UN VÉHICULE AUTOMOBILE

(30) Priorität: 17.02.2020 DE 102020201898
(43) Veröffentlichungstag der Anmeldung: 18.08.2021
(73) Patentinhaber: Continental Reifen Deutschland GmbH, 30175 Hannover (DE)
(72) Erfinder: Gläser, Frank, 30419 Hannover (DE)
(74) Vertreter: Continental Corporation

(56) Entgegenhaltungen:
- EP-A1- 3 533 641
- JP-A- 2014 231 337
- US-A1- 2006 250 228

## Beschreibung

Die vorliegende Erfindung betrifft ein Verfahren, ein Computerprogramm mit Instruktionen und eine Vorrichtung zum Betreiben eines Kontrollsystems für in Reifen eines Kraftfahrzeugs angeordnete elektronische Komponenten.

Nutzfahrzeuge werden zunehmend mit Reifensensoren ausgerüstet, beispielsweise zur Überwachung des Reifendrucks. Die Sensoren senden diese Daten permanent über eine lokale drahtlose Verbindung an eine zentrale Kontrolleinheit (CCU: Central Control Unit). Gegebenenfalls können zusätzliche Empfangsgeräte genutzt werden.

Die Reifensensoren haben eindeutige Identifikatoren, um sie dem Fahrzeug, dem Reifen und der Position am Fahrzeug eindeutig zuordnen zu können. Nach der Montage der Sensoren in den Reifen und der Reifen am Fahrzeug wird manuell eine Konfiguration erstellt, die beschreibt, an welcher Radposition am Fahrzeug sich welcher Reifen bzw. welcher Sensor befindet. Diese Konfiguration wird in der zentralen Kontrolleinheit für das Fahrzeug hinterlegt. Kommt es später beispielsweise zu einem Druckverlust an einem Reifen des Fahrzeugs, kann sofort ermittelt werden, an welcher Radposition dieser auftritt.

Bei Nutzfahrzeugen werden häufig Reifen in der Position getauscht oder komplett ersetzt. Ist von so einer Aktion mehr als ein Reifen an einem Fahrzeug betroffen, muss die Konfiguration neu erstellt werden. Dies geschieht zurzeit wiederum manuell, was erneuten ungewollten Aufwand bedeutet. Wünschenswert wäre hier eine automatische Detektion der Veränderungen der Reifen- zu Radposition am Fahrzeug.

Im Pkw-Bereich wurde das Problem der automatischen Reifenpositionserkennung bereits mit dem LSE-Lokalisierungsansatz (LSE: Localisation with Synchronized Emissions; Lokalisierung mit synchronisierter Abstrahlung) gelöst. Beispielsweise beschreibt DE 197 34 323 A1 ein Verfahren zur Lokalisierung von Fahrzeugrädern, bei dem jedes Rad eine eigene Reifendruckkontrolleinrichtung aufweist, die jeweils in zeitlichen Abständen Funksignale mit entsprechenden Reifeneigenschaften und einer individuellen Kennung an eine Zentraleinheit aussendet. Ferner ist jedem Rad ein Drehwinkel- bzw. Drehzahlsensor für ein Antiblockiersystem (ABS) zugeordnet. Mithilfe von Umdrehungssensoren in den Radelektroniken kann nun zu zwei vorgegebenen Zeitpunkten der Winkelversatz eines Rades eines Kraftfahrzeugs gemessen werden. Aus den Signalen der ABS-Drehzahlsensoren wird dann festgestellt, an welchem Rad des Fahrzeugs der entsprechende Winkelversatz vorliegt, und es wird eine entsprechende Zuordnung bzw. Lokalisierung getroffen.

Der oben beschriebene Ansatz erfordert die Wheel-Tick-Information des ABS-Systems (ABS: Antiblockiersystem) an jedem Rad des Fahrzeugs. Ein Wheel Tick entspricht einem Messsignal, das von einem Sensor bereitgestellt wird, wenn sich der Reifen um einen definierten Drehwinkel gedreht hat. Diese Informationen sind bei Nutzfahrzeugen meist nicht auf allen Rädern verfügbar, da nicht alle über ABS verfügen. Es ist dafür ebenfalls der Zugriff auf den CAN-Bus (CAN: Controller Area Network) des Fahrzeugs notwendig, der Nachrüstlösungen in der Regel nicht zur Verfügung steht.

Eine weitere bekannte Technik ist die Verwendung von Signalstärkewerten bzw. RSSI-Werten (RSSI: Received Signal Strength Indication; Indikator für die Empfangsfeldstärke), um die Reifenposition an Fahrzeugen zu ermitteln. Hierbei geht man von der Annahme aus, dass sich die Sensoren in den Reifen in unterschiedlicher Entfernung von einem Empfänger befinden und somit die Signale der Reifensensoren mit unterschiedlichen RSSI-Werten empfangen werden. Anhand der Unterschiede kann auf den jeweiligen Reifensensor und somit auf den Reifen und seine Position am Fahrzeug zurückgeschlossen werden.

Vor diesem Hintergrund beschreibt US 2006/0250228 A1 eine Radidentifizierungsvorrichtung mit einer Vielzahl von Sendern und einem Empfänger. Jeder der Sender ist an einem der Räder eines Fahrzeugs mit einem bestimmten Abstand von einer Drehachse des Rades montiert. Jeder der Sender ist so konfiguriert, dass er ein Signal sendet, wenn seine Winkelposition mit einer vorgegebenen Winkelposition übereinstimmt. Der Empfänger umfasst eine Empfangsantenne, die sich an einer solchen vorbestimmten Position an einer Karosserie des Fahrzeugs befindet, dass alle Abstände von der Empfangsantenne zu den Drehachsen der Räder des Fahrzeugs voneinander verschieden sind. Der Empfänger empfängt alle von den Sendern gesendeten Signale, detektiert die empfangenen Signalpegel der Signale und identifiziert für jedes der Signale auf der Grundlage des detektierten empfangenen Signalpegels des Signals das Rad, an dem sich der Sender befindet, der das Signal gesendet hat.

JP 2014-231337 A beschreibt eine Radpositionsbestimmungsvorrichtung, die in der Lage ist, eine Position einer am Rad montierten Einheit, die ein Signal übertragen hat, mittels eines auf der Empfangsintensität des Signals basierenden Positionsbestimmungsverfahrens korrekt zu bestimmen. Eine RF-Sendeschaltung eines Radsensors sendet RF-Signale von mehreren Drehwinkeln einschließlich eines Referenzwinkels an einem Rad. In einem Steuergerät einer Empfängereinheit wird für jede Position des Rades eine Positionscharakteristik eingestellt, die auf der Grundlage der Differenz der Empfangsintensität in anderen Drehwinkeln in Bezug auf den Referenzwinkel bestimmt wird. Die Steuereinheit der Empfangseinheit bestimmt basierend auf der Positionscharakteristik, von welchem Rad das RF-Signal gesendet wurde.

EP 3 533 641 A1 beschreibt ein Verfahren zum Zuordnen von an Rädern eines Fahrzeugs montierten Reifendrucküberwachungseinheiten zu Radpositionen des Fahrzeugs, wobei einigen Radpositionen des Fahrzeugs ABS-Sensoren zugeordnet sind und anderen Radpositionen des Fahrzeugs keine ABS-Sensoren zugeordnet sind. Bei dem Verfahren werden Reifendrucküberwachungseinheiten durch Auswertung von Signalen der ABS-Sensoren zu den Radpositionen zugeordnet, denen ABS-Sensoren zugeordnet sind. Die übrigen Reifendrucküberwachungseinheiten werden durch Auswertung von Empfangspegeln, mit denen von den Reifendrucküberwachungseinheiten gesendete Signale empfangen werden, zu den Radpositionen zugeordnet, denen keine ABS-Sensoren zugeordnet sind. Die Auswertung der Signale von ABS-Sensoren wird dabei von einer ersten Auswerteeinheit durchgeführt. Die Auswertung der Empfangspegel wird von einer zweiten Auswerteeinheit durchgeführt.

Technische Realisierungen dieser Grundidee sind wiederum bisher nur bei Personenkraftwagen zu finden. Der generelle Fahrzeugaufbau, und somit auch die Verteilung der Reifen und Empfänger am Fahrzeug, ist bei ein und demselben Pkw-Modell immer gleich und eindeutig. Die Position des Empfängers kann für jedes Modell so gewählt werden, dass eine direkte Unterscheidung anhand der RSSI-Werte möglich ist. Dies bedeutet, dass eine auf RSSI-Werten basierende Bestimmung der Reifenpositionen verallgemeinert für alle Fahrzeuge eines Fahrzeugmodells realisiert werden kann. Die entsprechenden Systeme werden direkt im Fahrzeug verbaut und arbeiten dort lokal.

Aufgrund der oben beschriebenen Einschränkungen sollte im Nutzfahrzeugbereich eine automatische Detektion der Reifenpositionen am Fahrzeug vorzugsweise basierend auf der Auswertung der RSSI-Werte realisiert werden.

Bei Nutzfahrzeugen treten im Vergleich zum Pkw-Bereich aber einige zusätzliche Probleme auf. Aufgrund der Größe von Nutzfahrzeugreifen und der Verwendung von in den Innerliner des Reifens verklebten Sensoren ist die durch die Drehbewegung der Reifen sich ändernde Entfernung zwischen Sensor und Empfänger deutlich größer als bei Pkw-Reifen. Dies bedeutet, dass auch die Größe der RSSI-Werte von ein und demselben Sensor am Empfänger stärker variiert.

Anders als bei Pkw-Modellen, die ein festes Setup haben und wo alle Reifen örtlich eindeutig voneinander getrennt sind, können bei Nutzfahrzeugen verschiedenste Reifenkonstellationen auftreten. Speziell durch die Verwendung von Zwillingsreifen haben Reifen häufig sehr ähnliche Abstände zu den Empfängern, sodass eine Unterscheidung der Reifenposition direkt aus der Größe der empfangene RSSI-Werte sehr schwierig ist. Zudem können Anbauten am Nutzfahrzeug, die sich auf der Strecke zwischen Sensor und Empfänger befinden, sehr unterschiedlich sein und sich im Laufe der Zeit auch ändern. Werden beispielsweise Anbauten am Nutzfahrzeug verwendet, die das Signal teilweise absorbieren oder reflektieren, wird es zu veränderten RSSI-Werten an den Empfängern kommen.

Es ist eine Aufgabe der vorliegenden Erfindung, Lösungen für das Betreiben eines Kontrollsystems für in Reifen eines Kraftfahrzeugs angeordnete elektronische Komponenten bereitzustellen, die es ermöglichen, auf einfache und praktikable Weise Änderungen in einer Reifenkonfiguration festzustellen.

Diese Aufgabe wird durch ein Verfahren mit den Merkmalen des Anspruchs 1, durch ein Computerprogramm mit Instruktionen mit den Merkmalen des Anspruchs 7, und durch eine Vorrichtung mit den Merkmalen des Anspruchs 8 gelöst. Bevorzugte Ausgestaltungen der Erfindung sind Gegenstand der abhängigen Ansprüche.

Gemäß einem ersten Aspekt der Erfindung umfasst ein Verfahren zum Betreiben eines Kontrollsystems für in Reifen eines Kraftfahrzeugs angeordnete elektronische Komponenten die Schritte:
- Empfangen einer initialen Reifenkonfiguration;
- Empfangen von Signalstärken von Funksignalen der elektronischen Komponenten in einem Fahrbetrieb des Kraftfahrzeugs;
- Anlernen zumindest eines Klassifikators für zumindest eine Reifenposition auf Basis der initialen Reifenkonfiguration und der Signalstärken der empfangenen Funksignale in einer Anlernphase des Fahrbetriebs;
- Feststellen einer Änderung der Reifenkonfiguration durch Anwenden des Klassifikators im Fahrbetrieb nach dem Anlernen auf die Signalstärke der empfangenen Funksignale; und
- in Reaktion auf das Feststellen einer Änderung der Reifenkonfiguration, Anpassen der Reifenkonfiguration und erneutes Anlernen des zumindest einen Klassifikators.

Gemäß einem weiteren Aspekt der Erfindung umfasst ein Computerprogramm Instruktionen, die bei Ausführung durch einen Computer den Computer zur Ausführung der folgenden Schritte zum Betreiben eines Kontrollsystems für in Reifen eines Kraftfahrzeugs angeordnete elektronische Komponenten veranlassen:
- Empfangen einer initialen Reifenkonfiguration;
- Empfangen von Signalstärken von Funksignalen der elektronischen Komponenten in einem Fahrbetrieb des Kraftfahrzeugs;
- Anlernen zumindest eines Klassifikators für zumindest eine Reifenposition auf Basis der initialen Reifenkonfiguration und der Signalstärken der empfangenen Funksignale in einer Anlernphase des Fahrbetriebs;
- Feststellen einer Änderung der Reifenkonfiguration durch Anwenden des Klassifikators im Fahrbetrieb nach dem Anlernen auf die Signalstärke der empfangenen Funksignale; und
- in Reaktion auf das Feststellen einer Änderung der Reifenkonfiguration, Anpassen der Reifenkonfiguration und erneutes Anlernen des zumindest einen Klassifikators.

Der Begriff Computer ist dabei breit zu verstehen. Insbesondere umfasst er auch Steuergeräte, Workstations, verteilte Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung hat eine Vorrichtung zum Betreiben eines Kontrollsystems für in Reifen eines Kraftfahrzeugs angeordnete elektronische Komponenten:
- eine Empfangseinheit zum Empfangen einer initialen Reifenkonfiguration und zum Empfangen von Signalstärken von Funksignalen der elektronischen Komponenten in einem Fahrbetrieb des Kraftfahrzeugs; und
- ein Trainingsmodul zum Anlernen zumindest eines Klassifikators für zumindest eine Reifenposition auf Basis der initialen Reifenkonfiguration und der Signalstärken der empfangenen Funksignale in einer Anlernphase des Fahrbetriebs;
wobei die Vorrichtung eingerichtet ist:
- im Fahrbetrieb nach dem Anlernen eine Änderung der Reifenkonfiguration festzustellen durch Anwenden des Klassifikators auf die Signalstärke der empfangenen Funksignale; und
- in Reaktion auf das Feststellen einer Änderung der Reifenkonfiguration die Reifenkonfiguration anzupassen und den zumindest einen Klassifikator erneut anzulernen.

Bei der erfindungsgemäßen Lösung werden die initiale Konfiguration der Reifenpositionen sowie die während der Fahrt gemessenen Werte der Signalstärke, z.B. die RSSI-Werte, genutzt, um damit einen Klassifikator für die Reifenpositionen anzulernen. Nach einer Anlernphase kann an das Fahrzeug oder eine Fahrzeugverwaltung signalisiert werden, dass der Klassifikator zur Verfügung steht und somit zukünftig Veränderungen der Reifenposition oder Reifenwechsel ohne zusätzliche manuelle Konfiguration durchgeführt werden können. Auf diese Weise wird der sich wiederholende manuelle Aufwand bei der Konfiguration der Reifenpositionen an einem mit einem Kontrollsystem ausgestatteten Fahrzeug erheblich reduziert.

Der Klassifikator wird nach dem Anlernen im Fahrbetrieb auf die Signalstärke der empfangenen Funksignale angewandt, um eine Änderung der Reifenkonfiguration festzustellen. In Reaktion auf das Feststellen einer Änderung der Reifenkonfiguration erfolgt eine Anpassung der Reifenkonfiguration und ein erneutes Anlernen des zumindest eines Klassifikators. Sobald der Klassifikator angelernt wurde und zur Verfügung steht, kann der angelernte Klassifikator auf die empfangen RSSI-Werte angewandt werden, um alle Reifenposition permanent zu überprüfen. Im Fall von erkannten Abweichungen kann die Konfiguration automatisch angepasst werden, woraufhin eine neue Anlernphase startet. Auf diese Weise können nach einer einmaligen manuellen Konfiguration alle weiteren Veränderungen von Reifen- bzw. Sensorpositionen am Fahrzeug automatisch erkannt und die hinterlegte Konfiguration entsprechend automatisch angepasst und aktuell gehalten werden.

Gemäß einem Aspekt der Erfindung wird für jede Achse des Kraftfahrzeugs ein Klassifikator angelernt. Gängige Reifendruckkontrollsysteme bestehen aus einem Empfänger in der zentralen Kontrolleinheit und mindestens einem zusätzlichen Empfänger. Um die RSSI-Werte der Vielzahl von Reifen an einem Nutzfahrzeug besser unterscheiden zu können ist es sinnvoll, zuerst die Zuordnung der Reifen zu den Achsen am Fahrzeug zu ermitteln und danach je einen Klassifikator pro Achse anzulernen.

Gemäß einem Aspekt der Erfindung erfolgt eine Zuordnung eines Reifens zu einer Achse auf Basis eines Vergleichs der Signalstärken der von zumindest zwei Empfängern empfangenen Funksignale. Die Zuordnung eines Reifens zu einer Achse kann beispielsweise auf Grundlage der Differenz der vorverarbeiteten RSSI-Werte von den beiden am Fahrzeug verbauten Empfängern realisiert werden. Dafür sind die Empfänger entlang des Fahrzeugs so zu montieren, dass dies möglich ist. Für das Anlernen des Klassifikators werden dann auch nur die RSSI-Werte des Empfängers benutzt, der in der Nähe der jeweiligen Achse verbaut ist und die beste unterscheidbare Information liefert.

Gemäß einem Aspekt der Erfindung wird beim Anlernen des zumindest einen Klassifikators ein vorangelernter Klassifikator verwendet. Trotz prinzipiell gleichen Fahrzeugtyps unterscheiden sich Nutzfahrzeuge aufgrund von Variationen und unterschiedlicher Anbauten, sodass kein genereller Klassifikator für alle Fahrzeuge eines Typs verwendet werden kann. Es muss für jedes Fahrzeug ein eigener, spezifischer Klassifikator angelernt werden. Um den Anlernprozess zu verkürzen ist es aber je nach verwendetem Klassifikationsalgorithmus möglich, einen vorangelernten Klassifikator für den gleichen Typ als Basis zu verwenden. Dies verkürzt die Dauer des Anlernens signifikant.

Gemäß einem Aspekt der Erfindung wird das Verfahren in einem Backend oder lokal im Kraftfahrzeug ausgeführt. Neben einer lokalen Realisierung der erfindungsgemäßen Lösung kann auch eine Realisierung als Backend-Service erfolgen. Dazu sendet z.B. eine Telematik-Einheit im Kraftfahrzeug die Daten an ein Backend. Im Backend läuft auf diesen Daten für jedes Fahrzeug ein Service, der speziell für dieses Fahrzeug einen Klassifikator für die Reifenpositionen auf Grundlage der initialen Konfiguration und der während der Fahrt gemessenen RSSI-Werte anlernt.

Gemäß einem Aspekt der Erfindung werden beim Anlernen des Klassifikators in einem Zeitintervall ermittelte Maximalwerte der Signalstärke verwendet oder es werden Signalstärken von Funksignalen verwendet, die bei einer vorgegebenen Orientierung der Reifen gesendet werden. Währen sich die Reifen am Fahrzeug drehen, ändern sich permanent die Positionen der Sensoren in Relation zu den Empfängern und damit ihre Abstände. Dies hat zur Folge, dass sich die RSSI-Werte für die empfangenen Signale von ein und demselben Reifen permanent ändern. Um diese Schwankungen auszugleichen, werden nur die in einem bestimmten Zeitintervall aufgetretenen maximalen RSSI-Werte weiterverwendet. Die Länge des Zeitintervalls ist so zu wählen, dass in Bezug auf die vorhandene Sendefrequenz der Signale die Wahrscheinlichkeit groß ist, dass ein Sendeprozess bei minimalem Abstand zwischen Sender und Empfänger stattgefunden hat, was sich in dem maximalen RSSI-Wert widerspiegelt. Um die Wahrscheinlichkeit zu erhöhen, können auch Werte nur in bestimmten höheren Geschwindigkeitsbereichen des Fahrzeugs benutzt werden. Die Auswahl der Maximalwerte kann im Backend erfolgen, kann aber auch auf der Kontrolleinheit im Fahrzeug realisiert sein, sodass dann nur die Sequenz von Maximalwerten an das Backend übertragen wird.

Alternativ zur Verwendung der Maximalwerte kann auch ein Ansatz realisiert werden, bei dem alle Sensoren in den Reifen am Fahrzeug immer bei einer bestimmten Orientierung des Reifens Signale senden. Dadurch ist der Abstand zwischen Sensor und Empfänger bei der Bestimmung des RSSI-Wertes immer gleich und die Schwankungen der RSSI-Werte aufgrund variierender Abstände treten nicht auf. Realisierbar ist dies beispielsweise durch die Verwendung von Sensoren, die auch die Radialbeschleunigung messen. Diese ist beim Aufsetzen der Lauffläche auf die Straße kurz null. Wenn also alle Sensoren an einem Fahrzeug in dem Moment, wenn die gemessene Radialbeschleunigung null ist, ein Signal senden, senden sie immer von derselben definierten Stelle und damit immer mit demselben Abstand zum Empfänger. Dies führt zu einer deutlichen Erhöhung der Qualität der RSSI-Werte für die Positionsbestimmung. Dieser Ansatz kann zudem auch unabhängig davon genutzt werden, ob ein Klassifikator angelernt werden soll oder eine anders ausgestaltete Bestimmung der Reifenposition auf Basis von RSSI-Werten verwendet wird.

Dementsprechend hat eine elektronische Komponente zur Verwendung in einem Reifen eines Kraftfahrzeugs einen Beschleunigungssensor zum Erfassen einer Radialbeschleunigung. Die elektronische Komponente weist dabei einen Einrichtungsmodus auf, in dem die elektronische Komponente eingerichtet ist, ein Funksignal immer dann auszusenden, wenn die erfasste Radialbeschleunigung einen vorgegebenen Wert hat. Zudem weist die elektronische Komponente einen Normalbetriebsmodus, in dem die elektronische Komponente eingerichtet ist, in definierten Zeitabständen Signale zu senden.

Vorzugsweise wird eine erfindungsgemäße Lösung in einem Nutzfahrzeug genutzt, insbesondere in einem Lastkraftwagen, einem Bus oder einer Baumaschine. Die erfindungsgemäße Lösung ermöglicht es, auch bei diesen Fahrzeugen Änderungen der Reifenkonfiguration zu überwachen.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Betreiben eines Kontrollsystems für in einem Reifen eines Kraftfahrzeugs angeordnete elektronische Komponenten;
- Fig. 2: zeigt eine erste Ausführungsform einer Vorrichtung zum Betreiben eines Kontrollsystems für in einem Reifen eines Kraftfahrzeugs angeordnete elektronische Komponenten;
- Fig. 3: zeigt eine zweite Ausführungsform einer Vorrichtung zum Betreiben eines Kontrollsystems für in einem Reifen eines Kraftfahrzeugs angeordnete elektronische Komponenten;
- Fig. 4: zeigt schematisch einen Reifen für ein Kraftfahrzeug, in dem eine elektronische Komponente verbaut ist;
- Fig. 5: zeigt schematisch den Aufbau einer elektronischen Komponente zur Verwendung in einem Reifen;
- Fig. 6: zeigt schematisch ein Kraftfahrzeug, in dem eine erfindungsgemäße Lösung realisiert ist; und
- Fig. 7: zeigt schematisch das Senden von Funksignalen durch die elektronischen Komponenten bei einer vorgegebenen Orientierung der Reifen.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

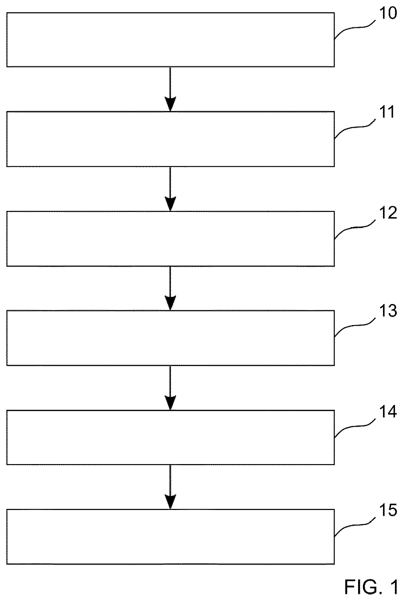

Fig. 1 zeigt schematisch ein Verfahren zum Betreiben eines Kontrollsystems für in Reifen eines Kraftfahrzeugs angeordnete elektronische Komponenten. In einem ersten Schritt wird eine initiale Reifenkonfiguration empfangen 10. Im Anschluss werden in einem Fahrbetrieb des Kraftfahrzeugs Signalstärken von Funksignalen der elektronischen Komponenten empfangen 11. Auf Basis der initialen Reifenkonfiguration und der Signalstärken der empfangenen Funksignale wird dann zumindest ein Klassifikator für zumindest eine Reifenposition angelernt 12. Beim Anlernen 12 des zumindest einen Klassifikators kann ein vorangelernter Klassifikator verwendet werden, um die Anlernphase zu verkürzen. Vorzugsweise wird für jede Achse des Kraftfahrzeugs ein Klassifikator angelernt 12. Eine Zuordnung eines Reifens zu einer Achse kann dabei auf Basis eines Vergleichs der Signalstärken der von zumindest zwei Empfängern empfangenen Funksignale erfolgen. Beim Anlernen 12 des Klassifikators können beispielsweise in einem Zeitintervall ermittelte Maximalwerte der Signalstärke verwendet werden. Alternativ können Signalstärken von Funksignalen verwendet werden, die bei einer vorgegebenen Orientierung der Reifen gesendet werden. Nach dem Anlernen 12 wird der Klassifikator im Fahrbetrieb auf die Signalstärke der empfangenen Funksignale angewandt 13, um eine Änderung der Reifenkonfiguration festzustellen 14. In Reaktion auf das Feststellen 14 einer Änderung der Reifenkonfiguration erfolgt eine Anpassung 15 der Reifenkonfiguration und ein erneutes Anlernen 12 des zumindest einen Klassifikators. Das Verfahren wird vorzugsweise in einem Backend ausgeführt, an das die erforderlichen Daten vom Kraftfahrzeug übermittelt werden. Es kann alternativ aber auch lokal im Kraftfahrzeug ausgeführt werden.

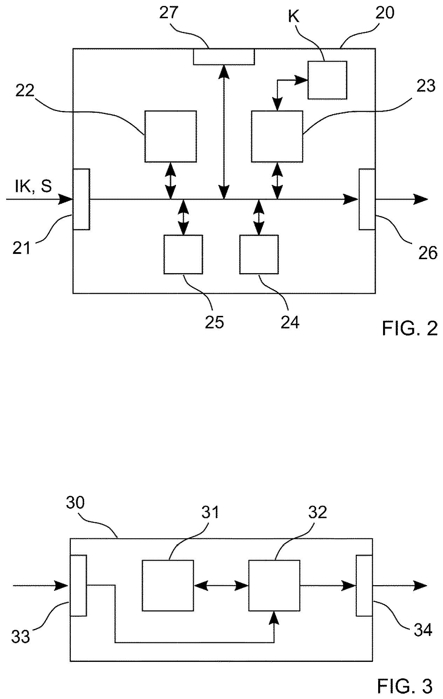

Fig. 2 zeigt eine vereinfachte schematische Darstellung einer ersten Ausführungsform einer Vorrichtung 20 zum Betreiben eines Kontrollsystems für in Reifen eines Kraftfahrzeugs angeordnete elektronische Komponenten. Bei dem Kontrollsystem kann es sich beispielsweise um ein Reifendruckkontrollsystem handeln. Die elektronische Komponente ist in diesem Fall ein Reifendrucksensor. Vorzugsweise ist das Kraftfahrzeug ein Lastkraftwagen, ein Bus oder eine Baumaschine. Die Vorrichtung 20 hat einen Eingang 21, über den eine Empfangseinheit 22 eine initiale Reifenkonfiguration IK und Signalstärken S von Funksignalen, die von den elektronischen Komponenten gesendet werden, empfangen kann. Ein Trainingsmodul 23 lernt auf Basis der initialen Reifenkonfiguration IK und der Signalstärken S der empfangenen Funksignale zumindest einen Klassifikator K für zumindest eine Reifenposition an. Beim Anlernen des zumindest einen Klassifikators kann ein vorangelernter Klassifikator verwendet werden, um die Anlernphase zu verkürzen. Vorzugsweise wird für jede Achse des Kraftfahrzeugs ein Klassifikator angelernt. Eine Zuordnung eines Reifens zu einer Achse kann dabei auf Basis eines Vergleichs der Signalstärken der von zumindest zwei Empfängern empfangenen Funksignale erfolgen. Beim Anlernen des Klassifikators können beispielsweise in einem Zeitintervall ermittelte Maximalwerte der Signalstärke verwendet werden. Alternativ können Signalstärken von Funksignalen verwendet werden, die bei einer vorgegebenen Orientierung der Reifen gesendet werden.

Die Vorrichtung 20 ist eingerichtet, den Klassifikator K nach dem Anlernen im Fahrbetrieb auf die Signalstärke S der empfangenen Funksignale anzuwenden, um eine Änderung der Reifenkonfiguration festzustellen. In Reaktion auf das Feststellen einer Änderung der Reifenkonfiguration erfolgt dann eine Anpassung der Reifenkonfiguration und ein erneutes Anlernen des zumindest einen Klassifikators K.

Die Empfangseinheit 22 und das Trainingsmodul 23 können von einer Kontrolleinheit 24 gesteuert werden. Über eine Benutzerschnittstelle 27 können gegebenenfalls Einstellungen der Empfangseinheit 22, des Trainingsmoduls 23 oder der Kontrolleinheit 24 geändert werden. Die in der Vorrichtung 20 anfallenden Daten können bei Bedarf in einem Speicher 25 abgelegt werden, beispielsweise für eine spätere Auswertung oder für eine Nutzung durch die Komponenten der Vorrichtung 20. Sie können zudem über einen Ausgang 26 ausgegeben werden. Der Eingang 21 und der Ausgang 26 können zu einer bidirektionalen Schnittstelle zusammengefasst sein. Die Empfangseinheit 22, das Trainingsmodul 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU (GPU: Graphics Processing Unit; Grafikprozessor) oder einer CPU (CPU: Central Processing Unit; zentrale Verarbeitungseinheit).

Die Vorrichtung 20 ist vorzugsweise in einem Backend realisiert, an das die erforderlichen Daten vom Kraftfahrzeug übermittelt werden. Sie kann alternativ aber auch lokal im Kraftfahrzeug angeordnet und Bestandteil des Kontrollsystems sein.

Fig. 3 zeigt eine vereinfachte schematische Darstellung einer zweiten Ausführungsform einer Vorrichtung 30 zum Betreiben eines Kontrollsystems für in Reifen eines Kraftfahrzeugs angeordnete elektronische Komponenten. Die Vorrichtung 30 weist einen Prozessor 32 und einen Speicher 31 auf. Beispielsweise handelt es sich bei der Vorrichtung 30 um einen Computer, ein Steuergerät, eine Workstation oder ein verteiltes System. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von einer initialen Reifenkonfiguration und von Signalstärken von Funksignalen, die von den elektronischen Komponenten gesendet werden. Vom Prozessor 32 generierte Daten werden über einen Ausgang 34 bereitgestellt. Darüber hinaus können sie im Speicher 31 abgelegt werden. Im Speicher 31 können zudem Messdaten oder Berechnungsergebnisse abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

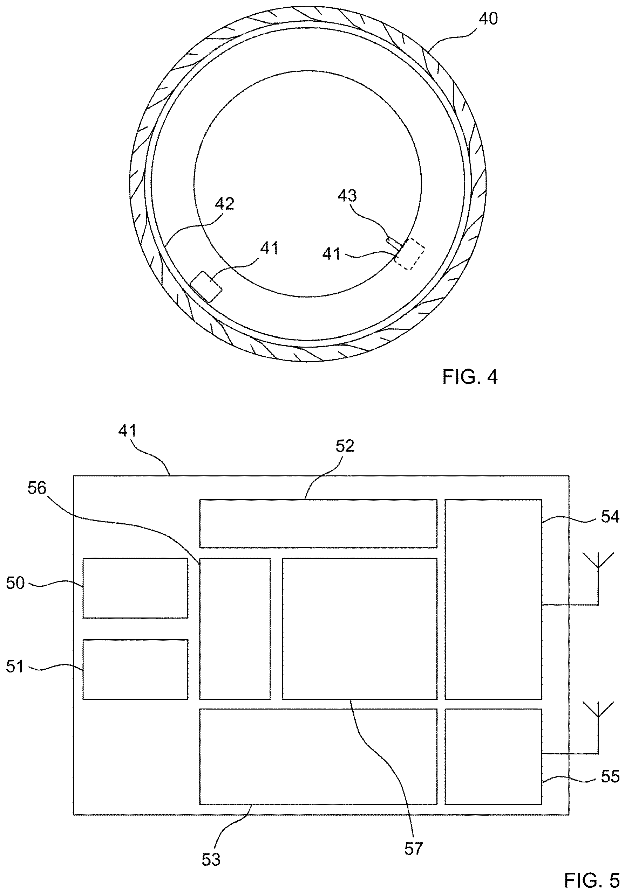

Fig. 4 zeigt schematisch einen Reifen 40 für ein Kraftfahrzeug, in dem eine elektronische Komponente 41 verbaut ist. Bei der elektronischen Komponente handelt es sich in diesem Beispiel um einen Reifendrucksensor. Dieser kann am Innerliner 42 des Reifens angebracht sein, beispielsweise mit Hilfe eines eingeklebten Containers. Alternativ kann der Reifendrucksensor auch an einem Ventil 43 des Reifens angeordnet sein. Dies ist durch den gestrichelten Kasten am Ventil 43 angedeutet.

Fig. 5 zeigt schematisch den Aufbau einer erfindungsgemäßen elektronischen Komponente 41 am Beispiel eines Reifendrucksensors. Der Reifendrucksensor weist einen Drucksensor 50 für die Messung des Reifendrucks sowie einen Beschleunigungssensor 51 für das Erfassen einer Radialbeschleunigung auf. Die Messwerte des Beschleunigungssensors 51 werden üblicherweise genutzt, um verschiedene Betriebsmodi des Reifendrucksensors zu aktivieren, z.B. einen Modus "Parken" oder einen Modus "Fahren". Ein Energiemanager 52 regelt die Energieversorgung der verschiedenen Komponenten des Reifendrucksensors. Firmware, Applikationen und Kalibrierungsdaten des Reifendrucksensors sind in einem Speicher 53 abgelegt. Dieser kann beispielsweise einen ROM-Speicher (ROM: Read-Only Memory; Nur-Lese-Speicher) und einen Flash-Speicher umfassen. Für das Übermitteln von Daten ist ein RF-Sender 54 vorgesehen, der beispielsweise mit einer Frequenz von 315 MHz oder 434 MHz senden kann. Zum Empfangen von Daten ist ein LF-Empfänger 55 vorgesehen, der z.B. eine Frequenz von 125 kHz verwenden kann. Die Messwerte des Drucksensors 50 und des Beschleunigungssensors 51 werden von einem A/D-Wandler 56 in digitale Daten gewandelt. Die Steuerung des Reifendrucksensors erfolgt durch einen Mikrocontroller 57.

Erfindungsgemäß weist die elektronische Komponente 41 einen Einrichtungsmodus auf, in dem sie eingerichtet ist, ein Funksignal auszusenden, wenn die erfasste Radialbeschleunigung einen vorgegebenen Wert hat, insbesondere, wenn die Radialbeschleunigung null ist. Dies ist in stets dann der Fall, wenn diejenige Stelle der Lauffläche des Reifens, an der die elektronische Komponente 41 montiert ist, auf die Fahrbahn aufsetzt. Auf diese Weise sendet die elektronische Komponente 41 immer von derselben definierten Stelle und damit immer mit demselben Abstand zum Empfänger.

Dies führt zu einer deutlichen Erhöhung der Qualität der RSSI-Werte für die Positionsbestimmung. In der Praxis ist es ausreichend, das Senden von Funksignalen an einer definierten Stelle nur für eine begrenzte Zeit durchzuführen. Beispielsweise kann bei jeder Radumdrehung ein RSSI-Wert erzeugt werden, sodass schon in kurzer Zeit viele für die Positionsbestimmung nutzbare RSSI-Werte verfügbar sind. Der Zeitraum bis zur Positionsbestimmung verringert sich daher deutlich.

Auch heute schon besitzen z.B. Reifendrucksensoren einen internen Status, in dem sie sich für eine bestimmte Zeit nach dem Anfahren des Fahrzeugs befinden. Unabhängig von dem regelmäßigen Senden der Druck- und Temperaturwerte kann eine solcher Reifendrucksensor während der Anfahrphase bei jeder Radumdrehung ein einfaches Testsignal zur RSSI-Wertbestimmung senden. Die zentrale Kontrolleinheit erkennt diese Signale als diejenigen Signale, die nur zur RSSI-Wertbestimmung generiert werden, und verarbeitet diese entsprechend oder leitet sie als solche an ein Backend weiter. Wechselt der Reifendrucksensor nach einer bestimmten Zeit in den Normalbetrieb-Status, beendet der Reifendrucksensor das Generieren der Testsignale. Er sendet dann in definierten Zeitabständen Signale, z.B. alle 2 Minuten.

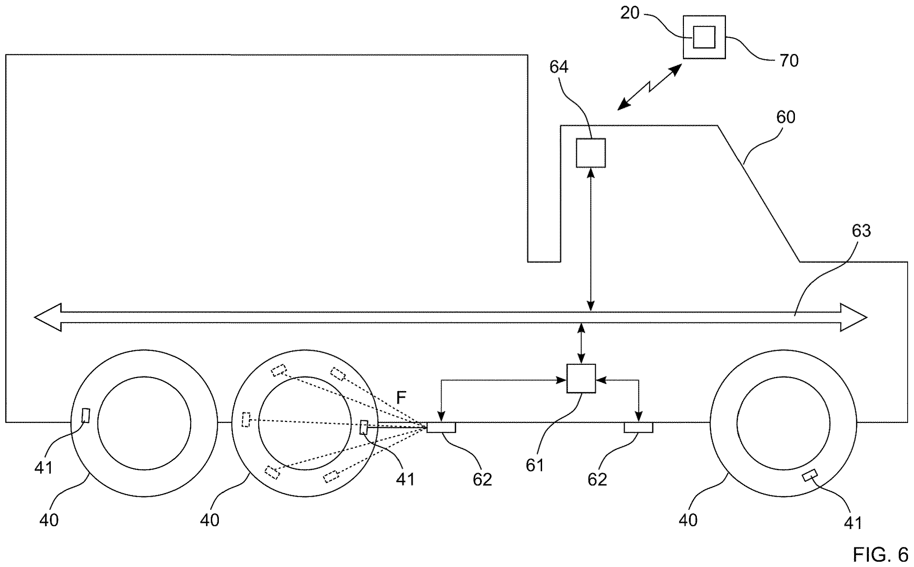

Fig. 6 zeigt schematisch ein Kraftfahrzeug 60, das in Verbindung mit einer erfindungsgemäßen Lösung genutzt werden kann. Bei dem Kraftfahrzeug 60 handelt es sich in diesem Fall um einen Lastkraftwagen. Das Kraftfahrzeug 60 weist eine zentrale Kontrolleinheit 61 auf, z.B. für ein Reifendruckkontrollsystem. In den Reifen 40 des Kraftfahrzeugs sind elektronische Komponenten 41 angeordnet, z.B. Reifendrucksensoren, die von der Kontrolleinheit 61 genutzt werden sollen. Für die Kommunikation mit den elektronischen Komponenten 41 weist das Kraftfahrzeug 60 einen oder mehrere Empfänger 62 auf, die an die zentrale Kontrolleinheit 61 angebunden sind. Die Kommunikation der Komponenten im Kraftfahrzeug 60 erfolgt beispielsweise über ein Netzwerk 63.

Zum Betreiben eines Kontrollsystems für die in den Reifen 40 angeordneten elektronischen Komponenten wird eine erfindungsgemäße Vorrichtung 20 genutzt. Die Vorrichtung 20 ist in diesem Beispiel in einem Backend 70 realisiert, an das die erforderlichen Daten vom Kraftfahrzeug 60 mittels eines Sendemoduls 64 übermittelt werden. Sie kann alternativ aber auch lokal im Kraftfahrzeug angeordnet und z.B. Bestandteil der Kontrolleinheit 61 sein.

Zum Anlernen eines Klassifikators soll die Funkstärke der von den elektronischen Komponenten 41 gesendeten Signale F an den Empfängern 62 genutzt werden. Dazu ist es hilfreich, wenn die empfangenen Signalstärkewerte für ein und dieselbe elektronische Komponente 41 relativ konstant sind und von denen der anderen im Kraftfahrzeug 60 vorhandenen elektronischen Komponenten 41 unterscheidbar sind. Die Signalstärke der Funksignale F am Empfänger 62 ist abhängig von der Entfernung zwischen Sender und Empfänger 62. Bei elektronischen Komponenten 41, die in den Innerliner geklebt oder in die Seitenwand des Reifens 40 eingelassen sind, ändert sich der Abstand allerdings permanent, sobald sich das Rad dreht. Dies hat zur Folge, dass sich die RSSI-Werte für die empfangenen Signale F von ein und demselben Reifen 40 fortlaufend ändern. Dieser Effekt ist bei Lastkraftwagen aufgrund der größeren Reifendurchmesser besonders groß. In Fig. 6 ist dieser Effekt an einem der hinteren Reifen schematisch dargestellt.

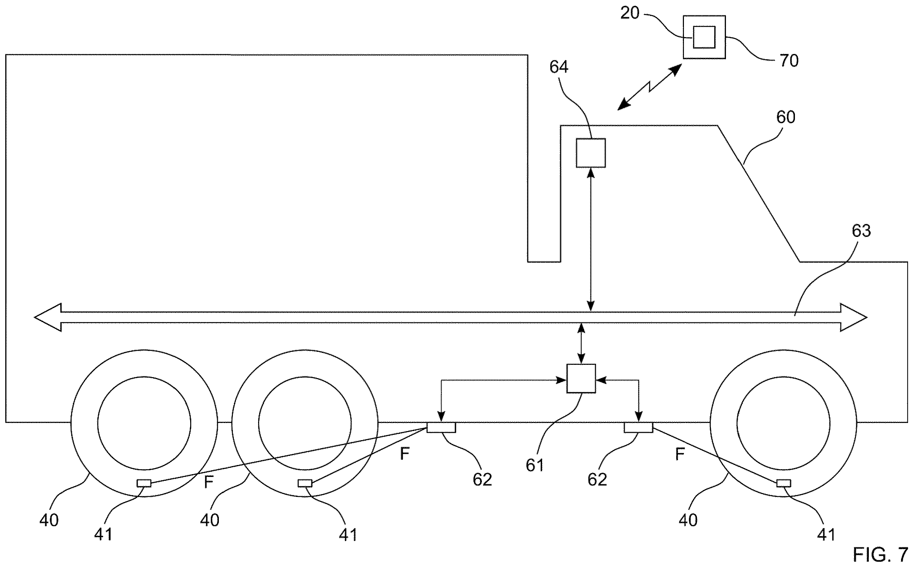

Gemäß einem Aspekt der Erfindung wird das Problem der schwankenden Signalstärke dadurch gelöst, dass die elektronischen Komponenten 41 in einem Einrichtungsmodus stets dann Signale F senden, wenn sich die elektronischen Komponenten 41 in einer definierten Position und damit immer im selben Abstand zum Empfänger 62 befinden. Insbesondere können die elektronischen Komponenten 41 dazu eine Radialbeschleunigung erfassen und ein Signal F dann senden, wenn die erfasste Radialbeschleunigung null ist. Dies ist immer dann der Fall, wenn diejenige Stelle der Lauffläche des Reifens, an der die elektronische Komponente 41 montiert ist, auf die Fahrbahn aufsetzt, d.h. wenn die elektronischen Komponenten 41 den geringsten Abstand zur Fahrbahn haben. Dies ist schematisch in Fig. 7 dargestellt.

### Bezugszeichenliste

- 10: Empfangen einer initialen Reifenkonfiguration
- 11: Empfangen von Signalstärken von Funksignalen der elektronischen Komponenten
- 12: Anlernen zumindest eines Klassifikators
- 13: Anwenden des Klassifikators im Fahrbetrieb
- 14: Feststellen einer Änderung der Reifenkonfiguration
- 15: Anpassen der Reifenkonfiguration
- 20: Vorrichtung
- 21: Eingang
- 22: Empfangseinheit
- 23: Trainingsmodul
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Reifen
- 41: Elektronische Komponente
- 42: Innerliner
- 50: Drucksensor
- 51: Beschleunigungssensor
- 52: Energiemanagement
- 53: Speicher
- 54: RF-Sender
- 55: LF-Empfänger
- 56: A/D-Wandler
- 57: Mikrocontroller
- 60: Kraftfahrzeug
- 61: Kontrolleinheit
- 62: Empfänger
- 63: Netzwerk
- 64: Sendemodul
- F: Funksignal
- IK: Initiale Reifenkonfiguration
- K: Klassifikator
- S: Signalstärke

## Patentansprüche

1. Verfahren zum Betreiben eines Kontrollsystems für in Reifen (40) eines Kraftfahrzeugs (60) angeordnete elektronische Komponenten (41), mit den Schritten:
- Empfangen (10) einer initialen Reifenkonfiguration (IK); und
- Empfangen (11) von Signalstärken (S) von Funksignalen (F) der elektronischen Komponenten (41) in einem Fahrbetrieb des Kraftfahrzeugs (60);
- Anlernen (12) zumindest eines Klassifikators (K) für zumindest eine Reifenposition auf Basis der initialen Reifenkonfiguration (IK) und der Signalstärken (S) der empfangenen Funksignale (F) in einer Anlernphase des Fahrbetriebs;
- Feststellen (14) einer Änderung der Reifenkonfiguration im Fahrbetrieb nach dem Anlernen (12) durch Anwenden des Klassifikators (K) auf die Signalstärke (S) der empfangenen Funksignale (F); **gekennzeichnet durch**:
- in Reaktion auf das Feststellen (14) einer Änderung der Reifenkonfiguration, Anpassen (15) der Reifenkonfiguration und erneutes Anlernen (12) des zumindest einen Klassifikators (K).

2. Verfahren gemäß Anspruch 1, wobei für jede Achse des Kraftfahrzeugs (60) ein Klassifikator (K) angelernt wird (12).

3. Verfahren gemäß Anspruch 2, wobei eine Zuordnung eines Reifens (40) zu einer Achse auf Basis eines Vergleichs der Signalstärken (S) der von zumindest zwei Empfängern (62) empfangenen Funksignale (F) erfolgt.

4. Verfahren gemäß einem der vorherigen Ansprüche, wobei beim Anlernen (12) des zumindest einen Klassifikators (K) ein vorangelernter Klassifikator verwendet wird.

5. Verfahren gemäß einem der vorherigen Ansprüche, wobei das Verfahren in einem Backend (70) oder lokal im Kraftfahrzeug (60) ausgeführt wird.

6. Verfahren gemäß einem der vorherigen Ansprüche, wobei beim Anlernen (12) des Klassifikators (K) in einem Zeitintervall ermittelte Maximalwerte (Sₘₐₓ) der Signalstärke (S) verwendet werden oder Signalstärken (S) von Funksignalen (F) verwendet werden, die bei einer vorgegebenen Orientierung der Reifen (40) gesendet werden.

7. Computerprogramm mit Instruktionen, die bei Ausführung durch einen Computer den Computer zur Ausführung der Schritte eines Verfahrens gemäß einem der Ansprüche 1 bis 6 zum Betreiben eines Kontrollsystems für in Reifen (40) eines Kraftfahrzeugs (60) angeordnete elektronische Komponenten (41) veranlassen.

8. Vorrichtung (20) zum Betreiben eines Kontrollsystems für in Reifen (40) eines Kraftfahrzeugs (60) angeordnete elektronische Komponenten (41), mit einer Empfangseinheit (21) zum Empfangen (10) einer initialen Reifenkonfiguration (IK) und zum Empfangen (11) von Signalstärken (S) von Funksignalen (F) der elektronischen Komponenten (41) in einem Fahrbetrieb des Kraftfahrzeugs (60);
- und mit einem Trainingsmodul (22) zum Anlernen (12) zumindest eines Klassifikators (K) für zumindest eine Reifenposition auf Basis der initialen Reifenkonfiguration (IK) und der Signalstärken (S) der empfangenen Funksignale (F) in einer Anlernphase des Fahrbetriebs;
wobei die Vorrichtung (20) eingerichtet ist:
- im Fahrbetrieb nach dem Anlernen (12) eine Änderung der Reifenkonfiguration festzustellen (14) durch Anwenden des Klassifikators (K) auf die Signalstärke (S) der empfangenen Funksignale (F); **gekennzeichnet durch**:
- in Reaktion auf das Feststellen (14) einer Änderung der Reifenkonfiguration die Reifenkonfiguration anzupassen (15) und den zumindest einen Klassifikator (K) erneut anzulernen (12).

## Claims

1. Method for operating a control system for electronic components (41) arranged in tyres (40) of a motor vehicle (60), comprising the following steps:
- reception (10) of an initial tyre configuration (IK); and
- reception (11) of signal strengths (S) of radio signals (F) of the electronic components (41) in a driving operation of the motor vehicle (60);
- training (12) of at least one classifier (K) for at least one tyre position based on the initial tyre configuration (IK) and the signal strengths (S) of the received radio signals (F) in a training phase of the driving operation;
- determination (14) of a change in the tyre configuration in driving operation after training (12) by applying the classifier (K) to the signal strength (S) of the received radio signals (F), **characterized by**:
- adjustment (15) of the tyre configuration and retraining (12) of at least one classifier (K) in response to the determination (14) of a change in the tyre configuration.

2. Method according to Claim 1, wherein one classifier (K) is trained (12) for each axle of the motor vehicle (60).

3. Method according to Claim 2, wherein a tyre (40) is assigned to an axle based on a comparison of the signal strengths (S) of the radio signals (F) received by at least two receivers (62).

4. Method according to any one of the preceding claims, wherein a pretrained classifier is used in the training (12) of the at least one classifier (K).

5. Method according to any one of the preceding claims, wherein the method is carried out in a backend (70) or locally in the motor vehicle (60).

6. Method according to any one of the preceding claims, wherein the training (12) of the classifier (K) uses maximum values (Sₘₐₓ) of the signal strength (S) which are ascertained in a time interval or uses signal strengths (S) of radio signals (F), which signals are transmitted given a predetermined orientation of the tyres (40).

7. Computer program containing instructions which, when executed by a computer, cause the computer to execute the steps of a method according to any of Claims 1 to 6 for operating a control system for electronic components (41) arranged in tyres (40) of a motor vehicle (60).

8. Device (20) for operating a control system for electronic components (41) arranged in tyres (40) of a motor vehicle (60), having a receiving unit (21) for receiving (10) an initial tyre configuration (IK) and for receiving (11) signal strengths (S) of radio signals (F) of the electronic components (41) in a driving operation of the motor vehicle (60);
- and having a training module (22) for training (12) at least one classifier (K) for at least one tyre position based on the initial tyre configuration (IK) and the signal strengths (S) of the received radio signals (F) in a training phase of the driving operation;
wherein the device (20) is configured:
- to determine (14) a change in the tyre configuration in driving operation after training (12) by applying the classifier (K) to the signal strength (S) of the received radio signals (F); **characterized by**:
- adjusting (15) the tyre configuration and retraining (12) at least one classifier (K) in response to the determination (14) of a change in the tyre configuration.

## Revendications

1. Procédé de fonctionnement d'un système de commande pour des composants électroniques (41) disposés dans des pneus (40) d'un véhicule automobile (60), comprenant les étapes suivantes :
- la réception (10) d'une configuration initiale de pneu (IK) ; et
- la réception (11) d'intensités de signal (S) de signaux radio (F) des composants électroniques (41) pendant un fonctionnement de conduite du véhicule automobile (60) ;
- l'apprentissage (12) d'au moins un classificateur (K) pour au moins une position de pneu sur la base de la configuration initiale de pneu (IK) et des intensités de signal (S) des signaux radio (F) reçus pendant une phase d'apprentissage du fonctionnement de conduite ;
- la détermination (14) d'un changement de la configuration de pneu pendant le fonctionnement de conduite après l'apprentissage (12) en appliquant le classificateur (K) à l'intensité de signal (S) des signaux radio (F) reçus ;
**caractérisé par** :
- l'ajustement (15) de la configuration de pneu et le réapprentissage (12) dudit au moins un classificateur (K) en réponse à la détermination (14) d'un changement de la configuration de pneu

2. Procédé selon la revendication 1, dans lequel un classificateur (K) est appris (12) pour chaque axe du véhicule automobile (60).

3. Procédé selon la revendication 2, dans lequel un pneu (40) est associé à un axe sur la base d'une comparaison des intensités de signal (S) des signaux radio (F) reçus par au moins deux récepteurs (62).

4. Procédé selon l'une quelconque des revendications précédentes, dans lequel un classificateur pré-appris est utilisé lors de l'apprentissage (12) dudit au moins un classificateur (K).

5. Procédé selon l'une quelconque des revendications précédentes, dans lequel le procédé est exécuté sur un serveur backend (70) ou localement dans le véhicule automobile (60).

6. Procédé selon l'une quelconque des revendications précédentes, dans lequel, lors de l'apprentissage (12) du classificateur (K), des valeurs maximales (Sₘₐₓ) des intensités de signal (S) déterminées au cours d'un intervalle de temps sont utilisées ou des intensités de signal (S) de signaux radio (F) qui sont émis pour une orientation prédéfinie des pneus (40) sont utilisées.

7. Programme informatique comportant des instructions qui, lorsqu'elles sont exécutées par un ordinateur, amènent l'ordinateur à exécuter les étapes d'un procédé selon l'une quelconque des revendications 1 à 6 pour faire fonctionne un système de commande pour des composants électroniques (41) disposés dans des pneus (40) d'un véhicule automobile (60).

8. Dispositif (20) de fonctionnement d'un système de commande pour des composants électroniques (41) disposés dans des pneus (40) d'un véhicule automobile (60), comprenant une unité de réception (21) permettant la réception (10) d'une configuration de pneu initiale (IK) et la réception (11) d'intensités de signal (S) de signaux radio (F) des composants électroniques (41) pendant un fonctionnement de conduite du véhicule automobile (60) ;
- et comprenant un module d'apprentissage (22) destiné à l'apprentissage (12) d'au moins un classificateur (K) pour au moins une position de pneu sur la base de la configuration initiale de pneu (IK) et des intensités de signal (S) des signaux radio (F) reçus pendant une phase d'apprentissage du fonctionnement de conduite ;
le dispositif (20) étant conçu pour :
- déterminer (14), pendant le fonctionnement de conduite après l'apprentissage (12), un changement de la configuration de pneu en appliquant le classificateur (K) à l'intensité de signal (S) des signaux radio (F) reçus ; **caractérisé par** :
- l'ajustement (15) de la configuration de pneu et le réapprentissage (12) dudit au moins un classificateur (K) en réponse à la détermination (14) d'un changement de la configuration de pneu.
